**Europäisches Patentamt**

**European Patent Office**

**Office européen des brevets**

(11) Veröffentlichungsnummer: **0 212 236**
**A2**

(12) ## EUROPÄISCHE PATENTANMELDUNG

(21) Anmeldenummer: 86109595.8

(51) Int. Cl.⁴: **A 01 B 19/06**

(22) Anmeldetag: 14.07.86

(30) Priorität: 16.08.85 DE 3529285

(43) Veröffentlichungstag der Anmeldung: **04.03.87**
**Patentblatt 87/10**

(84) Benannte Vertragsstaaten: **FR GB IT NL**

(71) Anmelder: **Amazonen-Werke H. Dreyer GmbH & Co. KG,
Am Amazonenwerk 9-13, D-4507 Hasbergen-Gaste (DE)**

(72) Erfinder: **Higgen, Reinhard, Garstenstrasse 1,
D-2872 Hude I.O. (DE)**

(54) **Rüttelegge.**

(57) Rüttelegge mit einem Tragrahmen, die aus zumindest zwei hintereinander angeordneten und sich quer zur Fahrtrichtung erstreckenden und mit Bodenbearbeitungszinken besetzten Eggenbalken besteht, die über Schwingen an dem Tragrahmen angeordnet und während des Betriebes über einen Antriebsmechanismus in quer zur Fahrtrichtung hin- und hergehende Bewegungen versetzt werden, wobei zumindest in dem Bereich der krafteinleitenden Schwingenbefestigung Verstärkungsstücke an dem Eggenbalken angeordnet sind. Um die bekannte Rüttelegge hinsichtlich der Krafteinleitung in die Eggenbalken und das Schwingungsverhalten der Eggenbalken entscheidend zu verbessern, ist vorgesehen, daß die Verstärkungsstücke (17) zwischen den Schwingen (15) und den oberen Teilen (12) der Eggenbalken (3) angeordnet sind.

Amazonen-Werke

H. Dreyer GmbH & Co. KG

Am Amazonenwerk 9 - 13

4507 Hasbergen-Gaste

**ANR 1 000 667**


Rüttelegge

----------


Die Erfindung betrifft eine Rüttelegge gemäß des Oberbegriffes des Patentanspruches 1.

Eine derartige Rüttelegge ist bereits durch die DE-PS 33 40 821 bekannt geworden. Diese Rüttelegge weist im Querschnitt U-förmig ausgebildete Längsträger auf, die an ihrer Hinterseite offen sind. An dem oberen Steg des Längsträgers sind die Schwingen befestigt, während an dem unteren Steg die Bodenbearbeitungszinken angeschraubt sind. Nun sind in einer Ausführungsform bei der bekannten Rüttelegge in dem Bereich der Schwingenhalterungsbefestigung an dem oberen Schenkel auf der Unterseite des Schenkels Verstärkungsstücke angeordnet. Die Schwinge ist direkt auf dem oberen Schenkel angeschraubt. Nun hat es sich jedoch bei ausgiebigen Versuchen und bei praktischen Einsätzen der bekannten Rüttelegge gezeigt, daß es zu Rissen in dem U-förmigen Längsträger kommen kann, da die Krafteinleitung nicht optimal erfolgt und daß so die U-förmig offenen Längsträger sich aufschwingen können. Dieses Aufschwingen führt dann zwangsläufig zu Dauerbrüchen des Längsträgers.

Der Erfindung liegt nun die Aufgabe zugrunde, die bekannte Rüttelegge hinsichtlich der Krafteinleitung in die Eggenbalken und das Schwingungsverhalten der Eggenbalken entscheidend zu verbessern.

Diese Aufgabe wird erfindungsgemäß durch das Kennzeichen des Anspruches 1 gelöst. Infolge dieser Maßnahmen wird in überraschend einfacher Weise das Schwingungsverhalten der Eggenbalken erheblich reduziert und zwar zumindest soweit, daß es zu keinen Rissen bzw. Dauerbrüchen der Längsträger kommt.

In einer bevorzugten Ausführungsform ist erfindungsgemäß vorgesehen, daß jeweils in dem Bereich der Schwinge zwischen der Schwinge und dem Eggenbalken Führungshülsen angeordnet sind, während die zwischen dem Eggenbalken und den Verstärkungsstücken angeordneten Führungshülsen in einem größeren Abstand von den zwischen der Schwinge und dem Eggenbalken angeordneten Führungshülsen angeordnet sind. Infolge dieser Maßnahmen wird erreicht, daß die Kräfte sehr gut verteilt in den Zinkenbalken gebracht werden. Weiterhin wird ein Aufschwingen des Zinkenbalkens verhindert, so daß keine Dauerbrüche des Zinkenbalkens auftreten können. Hierbei ist von entscheidender Bedeutung, daß so die Kräfte an 2 in einem größeren Abstand voneinander liegenden Stellen von der Schwinge über die Verstärkungsstücke und die zwischen den Verstärkungsstücken und den Zinkenbalken angeordneten Hülsen in den Zinkenbalken eingeleitet werden.

Weiterhin ist erfindungsgemäß bei einer Rüttelegge vorgesehen, bei der die Befestigungsbolzen die Schwinge, die Verstärkungsstücke und die Eggenbalken durchgreifen, daß die Bohrungen in der Schwinge und in den Führungsstücken auf die Führungshülsen abgestimmt sind, während die jeweilige Bohrung in dem Eggenbalken etwas größer ist als der Durchmesser des Befestigungsbolzens, jedoch kleiner als der Außendurchmesser der Führungshülse. Hierdurch wird in jedem Falle sichergestellt, daß direkt an der Stelle, an der die Schwinge angeordnet ist, die Kräfte nicht über die Befestigungsbolzen, die die Schwinge durchgreifen, in den Eggenbalken eingeleitet werden.

In bevorzugter Weise ist erfindungsgemäß vorgesehen, daß die Eggenbalken als U-förmige Längsträger ausgebildet sind, wobei die Schwingen an dem oberen Schenkel der Längsträger befestigt sind, wobei sich zwischen den Schwingen und dem oberen Längsträger jeweils das erfindungsgemäße Verstärkungsstück befindet.

Weitere Einzelheiten der Erfindung sind den übrigen Unteransprüchen, der Beispielsbeschreibung und den Zeichnungen zu entnehmen. Hierbei zeigen

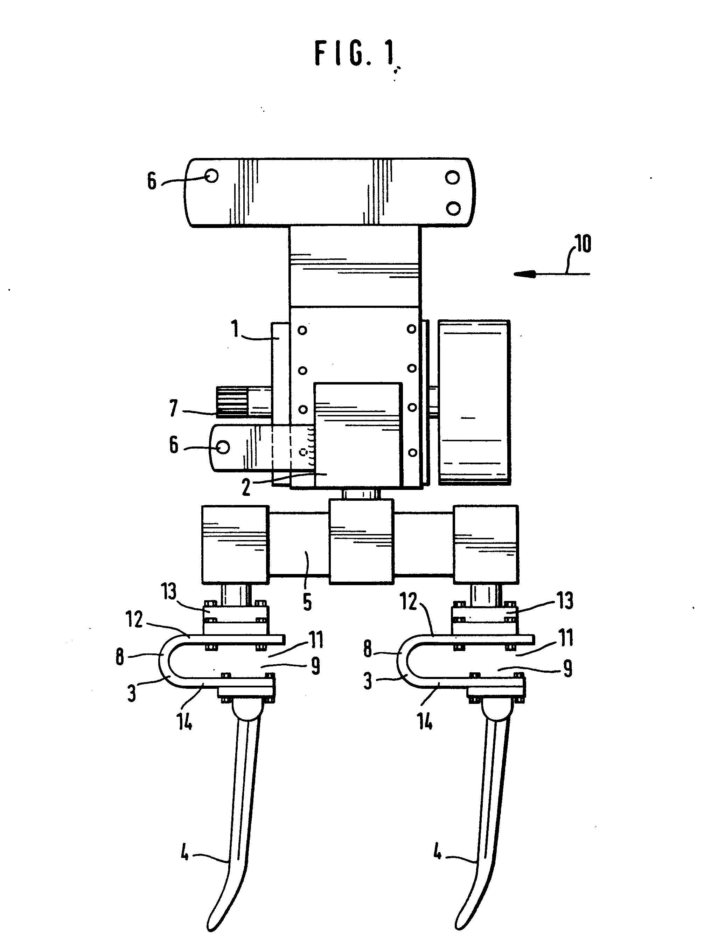

Fig. 1 eine erfindungsgemäß ausgebildete Rüttelegge in der Seitenansicht,

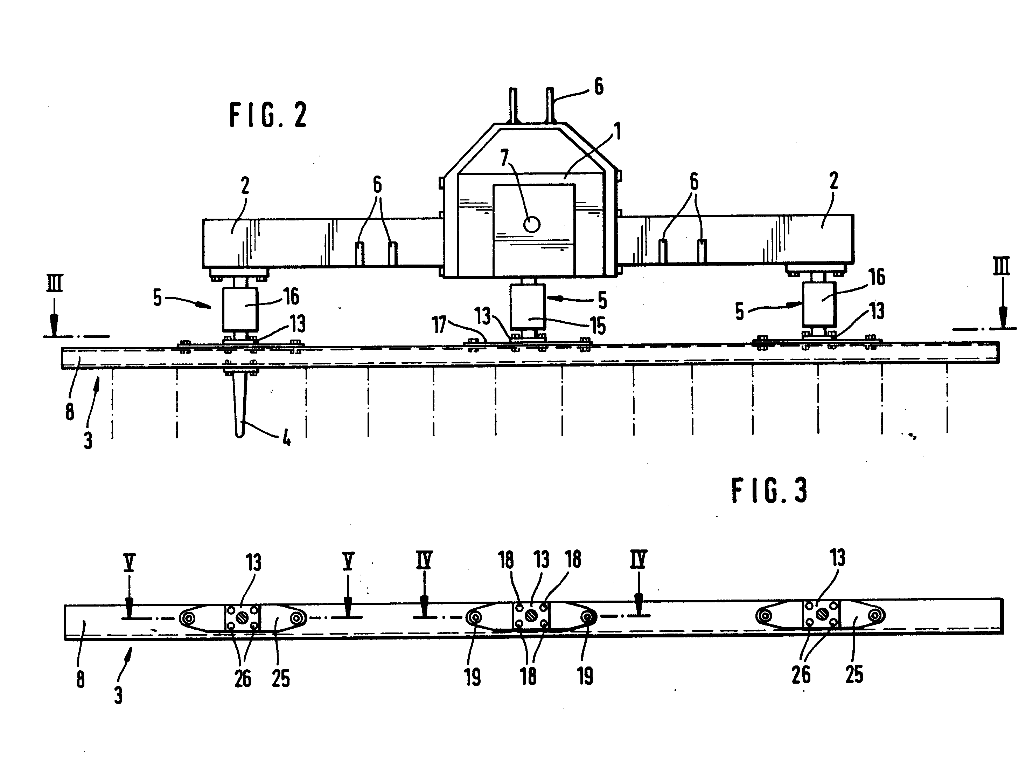

Fig. 2 die erfindungsgemäße Rüttelegge in der Ansicht von vorne in einem anderen Maßstab,

Fig. 3 einen Eggenbalken der Rüttelegge in der Ansicht III - III,

Fig. 4 die Befestigung der krafteinleitenden Schwinge an dem Zinkenbalken mit dem Verstärkungsstück in der Ansicht IV - IV und

Fig. 5 die Anordnung einer führendend Schwinge an dem Eggenbalken mit dem erfindungsgemäßen Verstärkungsstück in der Ansicht V - V.

Die Rüttelegge besteht im wesentlichen aus der Getriebeeinheit 1, dem an der Getriebeeinheit 1 festgeschraubten Tragrahmen 2 und den beiden hintereinander angeordneten Eggenbalken 3, die mit dem Bodenbearbeitungszinken 4 besetzt sind. Die Eggenbalken 3 sind mit Hilfe der Schwingen 5 an dem Tragrahmen 2 angeordnet. Die Rüttelegge wird mit Hilfe der Dreipunktkupplung 6 mit dem Dreipunktkraftheber einer landwirtschaftlichen Zug- oder Arbeitsmaschine gekuppelt. Hinter der Rüttelegge läßt sich in bekannter und daher nicht dargestellter Weise eine nachlaufende Walze, sowie eine Drillmaschine anordnen.

Der Antrieb der Eggenbalken 3 erfolgt über die an die Eingangswelle 7 der Getriebeeinheit 1 angeschlossenen Gelenkwelle von der Zapfwelle einer landwirtschaftlichen Zug- oder Arbeitsmaschine. Die Drehbewegung der Eingangswelle 7 wird durch den in der Getriebeeinheit 1 angeordneten Taumelkörpertrieb in eine dreh-schwingende Bewegung umgewandelt und auf die Schwinge 5 übertragen. Diese dreh-schwingende Bewegung versetzt die Eggenbalken in eine quer zur Fahrtrichtung der Maschine hin- und hergehende Bewegung. Durch diese hin- und hergehende Bewegung der Eggenbalken 3 wird der Boden durch die Zinken 4 gekrümelt.

Die Eggenbalken 3 sind als U-förmige Längsträger 8 ausgebildet, wobei sich die offene Seite 9 der Längsträger 8 sich jeweils auf der der Fahrtrichtung 10 abgewandten Seite 11 befindet. An dem oberen Schenkel 12 der Längsträger 8 sind die Halterungen 13 der Schwingen 5 angeordnet, während an dem gegenüberliegenden unteren Schenkel 14 die Zinken 4 befestigt sind. Die U-förmigen Längsträger sind jeweils über ihre ganze Länge auf ihrer Rückseite 11 offen. Die Längsträger 8 sind aus Federstahl hergestellt und nach dem Einstanzen der Löcher für die

5

Befestigung der Schwingenhalterung und der Zinken 4 gehärtet.

Durch Anbringung der Zinken 4 an die offenen U-förmigen Längsträger 8 ist es möglich, daß die Zinken 4 beim Auftreffen auf Steine diesen nach hinten etwas ausweichen können, da der untere Schenkel 14 elastisch verbogen wird. Der Zinken 4 prallt also nicht mit voller Wucht auf den im Boden festsitzenden Stein auf. Ein Teil der Energie wird durch die Verformung des U-förmigen Längsträgers 8 aufgenommen. Die Zinken werden nicht beschädigt. An der Getriebeeinheit 1 ist die Schwinge 5, die als krafteinleitende Schwinge 15 ausgebildet ist, angeordnet. Die krafteinleitende Schwinge 15 wird von dem in der Getriebeeinheit angeordneten Taumelkörpertrieb in eine schwingende Drehbewegung versetzt. An den Außenseiten der Rüttelegge 2 sind an dem Tragrahmen 2 die als führende Schwingen 16 ausgebildeten Schwingen 5 angeordnet. Die krafteinleitende Schwinge 15 weist die Halterung 13 auf. Die Halterung 13 ist frei drehbar in der Schwinge 15 gelagert.

Zwischen der Halterung 13 der Schwinge 15 und dem oberen Schenkel 12 der Eggenbalken 3 ist jeweils das Verstärkungsstück 17 angeordnet. Die Befestigungsbolzen 18, mit denen der Eggenbalken 3 jeweils an der Halterung 13 der Schwinge 15 befestigt ist, durchgreift die Halterung 13 der Schwinge 15, die Verstärkungsstücke 17 und den oberen Schenkel 12 des jeweiligen Eggenbalkens 3. Hierzu weist sowohl der Eggenbalken 3, das Verstärkungsstück 17 und die Halterung 13 der Schwinge 15 übereinander liegende Bohrungen auf, in denen die Befestigungsbolzen 18 angeordnet sind. Weiterhin sind jeweils in den äußeren Bereichen der Befestigungsstücke weitere Befestigungsbolzen 19 angeordnet, die auch den oberen Schenkeln 12 des Eggenbalkens 3 durchgreifen.

Somit sind die Verstärkungsstücke 17 auch in ihrem äußeren Bereich mit dem Eggenbalken 3 verbunden.

Zwischen der Halterung 13 und der Schwinge 15 und dem Verstärkungsstück sind innerhalb der Bohrungen 20, die von dem Bolzen 18 durchsetzt werden, die Führungshülsen, die als Spannhülsen 21 ausgebildet sind, angeordnet. Die Spannungshülsen 20 sind nicht innerhalb der Bohrung 22 in dem Eggenbalken 3, die auch von dem Bolzen 18 durchsetzt sind, angeordnet. Die Bohrung 20 in der Halterung 13 der Schwinge 15 und in dem Führungsstück 17 sind auf den Durchmesser der Führungshülse abgestimmt. Dies bedeutet also, daß die Führungshülse genau in die Bohrung 20 eingepaßt ist. Die Bohrungen 22 weisen eine kleineren Durchmesser als die Bohrungen 20 auf, somit weisen also die Bohrungen 22 einen kleineren Durchmesser als der Außendurchmesser der Führungshülse 21 auf.

Weiterhin sind in dem Außenbereich der Führungsstücke 17 in dem Bereich der Bohrungen 23, die in dem Verstärkungsstück 17 und in dem Eggenbalken 3 angeordnet sind und von dem Bolzen 19 durchsetzt werden, einen Durchmesser auf, der auf den Außendurchmesser der Führungshülsen 24 abgestimmt ist. Die Führungshülsen 24 sind in den Bohrungen 23 zwischen dem Verstärkungsstück 17 und dem oberen Schenkel 12 des Eggenbalkens 3 angeordnet.

Somit sind also die zwischen dem Eggenbalken 3 und den Verstärkungsstücken 17 jeweils angeordneten Führungshülsen 23 in dem größeren Abstand A von den zwischen der Halterung 13 der Schwinge 15 und dem Eggenbalken 3 angeordneten Führungshülsen 21.

Somit wird also die von dem in der Getriebeeinheit 1 angeordneten Taumelkörperantrieb erzeugte Kraft von der Halterung 13 der Schwinge 15 zunächst über die Führungshülsen 21 in die Verstärkungsstücke eingeleitet. Von hieraus wird die Kraft über die Verstärkungsstücke dann über die Führungshülsen 24, die sich ein einem Abstand A von den zwischen der Halterung 13 und dem Verstärkungsstück 17 angeordneten Führungshülse 21 befinden in den Eggenbalken 3 eingeleitet.

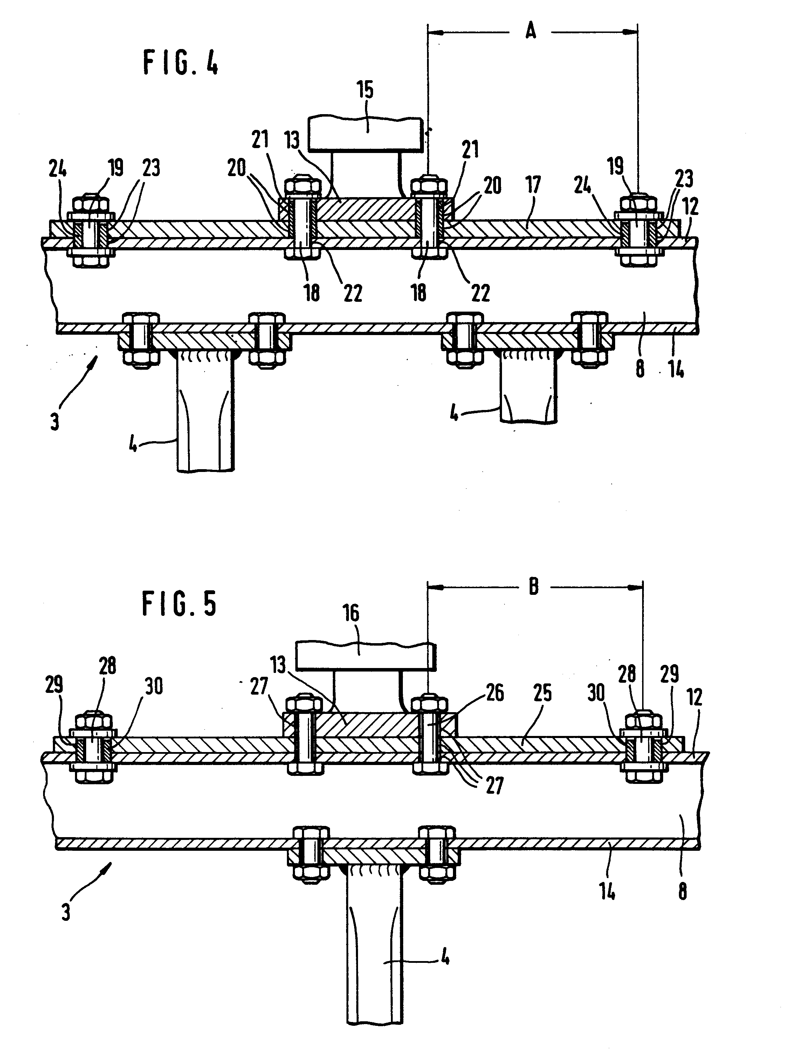

Die lediglich eine Führungsfunktion übernehmenden Schwingen 16 sind, wie Fig. 5 zeigt über die Halterung 13 und die Verstärkungsstücke 25 etwas anders an dem Eggenbalken 3 angeordnet. Die Befestigungsbolzen 26, die die Halterung 13 der Schwinge 16, das Verstärkungsstück 25 und den oberen Schenkel 12 des Eggenbalkens 3 miteinander verbinden, sind in den Bohrungen 27, die sich in der Halterung 13, dem Verstärkungsstück 25 und dem oberen Schenkel 12 des Eggenbalkens 3 befinden angeordnet. Der Durchmesser der Bohrungen 27 ist etwas größer als der Durchmesser der Befestigungsbolzen 26.

In einem größeren Abstand B, der etwa dem Abstand A entspricht, sind in dem Außenbereich des Verstärkungsstückes 25 die Befestigungsbolzen 28 angeordnet, die das Verstärkungsstück 25 mit dem oberen Schenkel 12 des Eggenbalkens 3 verbinden. Die Bolzen 28 sind innerhalb der Bohrungen 29, die sich in dem oberen Schenkel 12 des Eggenbalkens 3 und dem Verstärkungsstück 25 befinden angeordnet. Die Bohrungen 29 weisen einen Durchmesser auf, der auf den Durchmesser der Führungshülsen 30, die innerhalb der Bohrungen 29 angeordnet sind auf. Die Führungshülsen 30 dienen vor allem zum zentrieren und der genauen Befestigung des Verstärkungsstückes 25 an dem Eggenbalken 3.

Somit sind also die zwischen der Halterung 13 der Schwinge 5 und den Verstärkungsstücken 25 bzw. 17 angeordneten Führungshülsen 21 bzw. 30 nur bei der krafteinleitenden Schwinge 15 vorgesehen. Bei den den nur eine Führungsfunktion übernehmenden Schwingen 16 zugeordneten Führungsstückes 25 sind die Führungshülsen 30 nur in den Außenbereichen der Führungsstücke 25 zwischen den Verstärkungsstücken 25 und dem Eggenbalken 3 angeordnet.

0212236

1

Amazonen-Werke
H. Dreyer GmbH & Co. KG
Am Amazonenwerk 9 - 13
4507 Hasbergen-Gaste
**ANR 1 000 667**

P A T E N T A N S P R Ü C H E
------------------------------------

1.
Rüttelegge mit einem Tragrahmen, die aus zumindest zwei
hintereinander angeordneten und sich quer zur
Fahrtrichtung erstreckenden und mit
Bodenbearbeitungszinken besetzten Eggenbalken besteht,
die über Schwingen an dem Tragrahmen angeordnet und
während des Betriebes über einen Antriebsmechanismus in
quer zur Fahrtrichtung hin- und hergehende Bewegungen
versetzt werden, wobei zumindest in dem Bereich der
krafteinleitenden Schwingenbefestigung Verstärkungsstücke
an dem Eggenbalken angeordnet sind, dadurch
gekennzeichnet, daß die Verstärkungsstücke (17,25)
zwischen den Schwingen (5,15,16) und den oberen Teilen
(12) der Eggenbalken (3) angeordnet sind.

2.
Rüttelegge nach Anspruch 1, dadurch gekennzeichnet, daß
jeweils in dem Bereich der Schwinge (16) zwischen der
Schwinge (16) und dem Eggenbalken (3) Führungshülsen
(21) angeordnet sind, während die zwischen dem
Eggenbalken (3) und den Verstärkungsstücken (17,25)
angeordneten Führungshülsen (24,30) in einem größeren
Abstand (A.B) von den zwischen der Schwinge (15) und dem
Eggenbalken (3) angeordneten Führuen (21)
angeordnet sind

3.

Rüttelegge nach Anspruch 2, wobei die Befestigungsbolzen die Schwinge, die Verstärkungsstücke und die Eggenbalken durchgreifen, dadurch gekennzeichnet, daß die Bohrungen (20) in der Schwinge (15) und in dem Verstärkungsstück (17) auf die Führungshülsen (21) abgestimmt sind, während die jeweilige Bohrung (22) in dem Eggenbalken (3) etwas größer ist als der Durchmesser des Befestigungsbolzen (18), jedoch kleiner als der Außendurchmesser der Führungshülse (21) ist.

4.

Rüttelegge nach Anspruch 3, dadurch gekennzeichnet, daß die zwischen der Schwinge (15) und den Verstärkungsstücken (17) angeordneten Führungshülsen (21) nur bei der krafteinleitenden Schwinge (15) vorgesehen sind, und daß bei den den anderen Schwingen (16) zugeordneten Verstärkungsstücken (25) die Führungshülsen (30) in den Außenbereichen der Verstärkungsstücke (25) zwischen den Verstärkungsstücken (25) und dem Eggenbalken (3) angeordnet sind.

5.

Rüttelegge nach Anspruch 2, dadurch gekennzeichnet, daß die Führungshülsen als Spannhülsen (21,30) ausgebildet sind.

6.

Rüttelegge nach Anspruch 1, dadurch gekennzeichnet, daß die Eggenbalken (3) als U-förmige Längsträger (8) ausgebildet sind, wobei die Schwingen (5,15,16) an dem oberen Schenkel (12) der Längsträger (8) befestigt sind.

# FIG. 1

0212236

FIG. 2

FIG. 3

0212236

FIG. 4

FIG. 5